# EUROPÄISCHE PATENTSCHRIFT

(11) **EP 1 227 616 B1**
(45) Veröffentlichungstag und Bekanntmachung des Hinweises auf die Patenterteilung: **08.11.2006**
(21) Anmeldenummer: 01101819.9
(22) Anmeldetag: 26.01.2001
(51) Int. Cl.: H04L 12/24, G06F 17/30

(54) **Verfahren, Programm und Anordnung zur Synchronisierung von einem Network Manager mit einem Network Agenten**
Method, program and arrangement for synchronization of a network manager with a network agent
Méthode, programme et arrangement pour la synchronisation d'un gestionnaire de réseau avec un agent de réseau

(43) Veröffentlichungstag der Anmeldung: 31.07.2002
(73) Patentinhaber: SIEMENS AKTIENGESELLSCHAFT, 80333 München (DE)
(72) Erfinder: Kring, Gerhard, 81479 München (DE)

(56) Entgegenhaltungen:
- EP-A- 0 898 398
- WO-A-99/59326
- US-A- 5 870 765
- KIM J -H ET AL: "Single fault-tolerant distributed shared memory using competitive update" MICROPROCESSORS AND MICROSYSTEMS,GB,IPC BUSINESS PRESS LTD. LONDON, Bd. 21, Nr. 3, 15. Dezember 1997 (1997-12-15), Seiten 183-196, XP004107414 ISSN: 0141-9331

## Beschreibung

Das Management von Kommunikationsnetzen, die eine Mehrzahl von Übermittlungsknoten umfassen, wird üblicherweise mit Hilfe einer Manager/Agent Architektur bewirkt. In einer solchen Architektur stellen regelmäßig die Übermittlungsknoten die 'Agents' und die Managementknoten zum Management des Kommunikationsnetzes die 'Manager' dar. In komplexen Kommunikationsnetzen können zudem Umbrella-Managementknoten zum Management der Manager vorgesehen sein. In einem derartigen Szenario besitzen die Managementknoten eine Doppelrolle: Einerseits wirken sie als Manager gegenüber den Übermittlungsknoten; andererseits sind sie die Agenten der Umbrella-Managementknoten. Die Umbrella-Managementknoten sind hierbei ihrerseits wiederum die Manager der Managementknoten.

Üblicherweise wird von jedem Agenten eine lokale Datenbank geführt. Diese wird in einer objektorientierten Management-Architektur auch als 'Management Information Base (MIB)' bezeichnet. In einer MIB sind hierbei sog. 'Objektinstanzen' gespeichert. Die Objektinstanzen umfassen meist eine Vielzahl von sog. 'Attributen', in denen unterschiedliche Informationen hinterlegt sind. Aus Performancegründen wird auch von den Managern eine lokale Datenbank geführt, in der zumindest Teile der MIB von jedem der dem Manager zugeordneten Agenten in Kopie gespeichert sind. Hierbei gilt jede Kopie in den Managern als potentiell falsch, da sie ggf. nicht identisch mit der jeweiligen MIB im Agenten sein kann. Die MIB im Agenten gilt somit als Master, d.h. ihre Objektinstanzen enthalten die korrekten Werte, die für Agenten und Manager verbindlich sind.

Ein Paar Agent/Manager ist synchronisiert, solange die im Manager gespeicherte Kopie der MIB des Agenten identisch ist mit der im Agenten gespeicherten MIB. Es können jedoch eine Mehrzahl von Ereignissen eintreten, in deren Folge ein Manager seine Synchronität mit einem oder mehreren seiner Agenten verlieren würde oder zumindest dazu führen würde, dass der Manager nicht mehr weiß, ob er synchronisiert ist oder nicht. Beispielsweise könnte der Manager für eine Weile ausfallen und Änderungen, die während dieser Zeit an einer MIB in einem Agenten vorgenommen werden, nicht mitbekommen. Oder die Verbindung zwischen Manager und Agent wird unterbrochen, wobei der Manager nach dem Ende der Unterbrechung nicht weiß, ob seine Kopie noch aktuell ist. In beiden Fällen wird der Manager seine Kopie überprüfen und ggf. aktualisieren. Bei einer kleinen MIB kann dies dadurch erfolgen, dass der Manager die gesamte MIB aus dem Agenten ausliest. Sofern die MIB im Agenten jedoch sehr groß ist, kommen üblicherweise zeitoptimierte Verfahren zur Resynchronisierung zum Einsatz.

Wegen der hohen Bedeutung von Netzmanagement für den Betrieb von Kommunikationsnetzen werden häufig zusätzlich begleitende Maßnahmen ergriffen, um Ausfälle von Knoten oder Verbindungen in ihren Auswirkungen auf den Betrieb der Kommunikationsnetze zu minimieren:
- Jede lokale Datenbank kann durch ein Backup/Restore-System geschützt werden. Hierbei wird in regelmäßigen Abständen ein Backup der geschützten Datenbank erzeugt, auf das bei Verlust der Datenbank, z.B. infolge eines Festplatten-Crash, zugegriffen wird. Dies wird insbesondere bei der Master-Datenbank in den jeweiligen Agenten durchgeführt.
- Jedem Manager wird zumindest ein Backup-Manager zugeordnet, der bei Ausfall des (Primary-) Managers oder der Verbindungen ersatzweise solange als Manager fungiert, bis der Primary-Manager wieder das Management übernimmt.

In der europäischen Patentanmeldung EP 0 898 398 ist ein Verfahren zur zeitoptimierten Resynchronisierung eines Managers mit seinen Agenten offenbart. Hierbei sind in jeder Objektinstanz Attribute UNIQUEID und DATASYNCH vorgesehen. UNIQUEID ist eine eindeutige Nummer, die jeder Objektinstanz bei deren Erzeugung zugeordnet wird. Der Wertebereich von UNIQUEID wird so gewählt, dass in jedem Agenten in der Praxis immer mehr eindeutige ID's verfügbar sind als Objektinstanzen. DATASYNCH ist eine Zahl, die jeder Objektinstanz bei deren Erzeugung zugeordnet wird und anfangs den Wert 0 oder 1 erhält. Bei jeder Modifikation der Objektinstanz wird DATASYNCH um 1 erhöht. Der Wertebereich von DATASYNCH wird so gewählt, dass jede in der Praxis zu erwartende Anzahl von Modifikationen, die während einer Asynchronitätsphase zwischen Manager und Agent auftreten, behandelt werden können.

Zur Synchronisierung mit einem Agenten fragt der Manager für alle in die lokale Datenbasis des Managers kopierten Objektinstanzen deren UNIQUEID und DATASYNCH aus der MIB des Agenten ab und vergleicht diese Werte mit denen der Kopien in der lokalen Datenbasis des Managers. Es wird jede lokale Kopie einer Objektinstanz gelöscht, deren lokale DATASYNCH sich von der abgefragten DATASYNCH unterscheidet. Anschließend werden diese Objektinstanzen vollständig vom Agenten in die lokale Datenbasis des Managers nachgeladen.

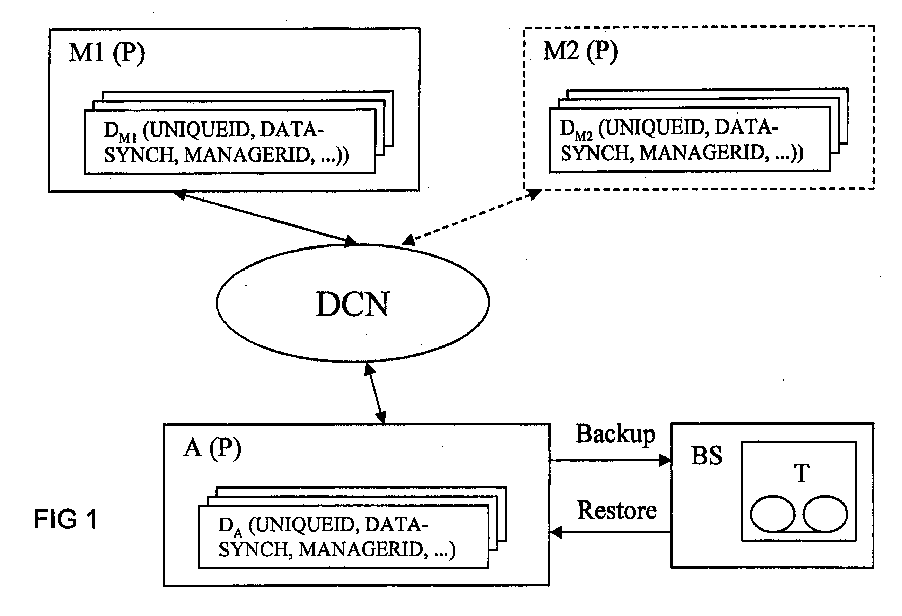

Dieses Verfahren kann jedoch nicht bei Agenten eingesetzt werden, deren lokale Datenbank durch ein Backup/Restore-System geschützt wird, wie folgendes, auch in Figur 1 dargestelltes, Beispiel zeigt:
1. Ausgangssituation: DATASYNCH von Objekt D hat Wert **x**.
2. Agent A führt Backup durch.
3. Manager M1 ändert Objekt D auf Zustand Z1. Dabei wird DATASYNCH von Objekt D im Agenten A und im Manager M1 auf **x+1** erhöht.
4. Manager M1 oder seine Verbindung zum Agenten A fällt aus.
5. Agent A (und/oder Manager M2) übernimmt die Kontrolle.
6. Es tritt ein Fehler im Agenten A auf, der einen Restore des Objekts D von dem Backup erforderlich macht.
7. DATASYNCH von Objekt D_{A} hat im Agenten A wieder Wert **x.**
8. Agent A (oder Manager M2) ändert Objekt D auf einen Zustand Z2 (ungleich Z1). DATASYNCH von Objekt D wird im Agent A (und ggf. im Manager M2) auf **x+1** erhöht.
9. Manager Ml übernimmt wieder die Steuerung.
10. Der Vergleich der Versionszähler DATASYNCH ergibt für das Objekt D Synchronität, obwohl das Objekt D im Manager M1 den Zustand Z1 und im Agent A den Zustand Z2 hat.

Eine Aufgabe der Erfindung liegt somit darin, ein verbessertes Verfahren zur Synchronisierung von einem Network Manager mit einem Network Agent zu finden.

Eine weitere Aufgabe der Erfindung liegt darin, ein Verfahren zur Synchronisierung von einem Network Manager mit einem Network Agent zu finden, dass auch bei Einsatz von einem Backup-Restore System zum Schutz einer lokalen Datenbank des Network Agenten zu einer fehlerfreien Synchronisierung führt.

Die Aufgaben werden durch die Merkmale des Patentanspruchs 1 gelöst.

Vorteilhaft wird hierbei eine fehlerfreie Synchronisierung von einem Network Manager mit einem Network Agent, dessen lokalen Datenbank von einem Backup-Restore System geschützt wird, bewirkt. Durch den gegenüber der europäischen Patentanmeldung EP 0 898 398 zusätzlichen Wert MANAGERID wird die fehlerhafte Synchronisation gemäß dem obigen Beispiel vermieden. Zwar weist DATASYNCH von Objekt D sowohl im Manager M1 als auch im Agenten A den Wert **x+1** auf; aber nach Durchführung von Schritt 8 hat MANAGERID von Objekt D im Manager M1 den Wert 'M1' und im Agenten A entweder den Wert 'A' oder 'M2'. Somit passt bei einem Vergleich der im Manager M1 gespeicherten Kopien der drei Werte UNIQUEID, DATASYNCH, MANAGERID des Objektes D mit den zugehörigen, im Agenten A gespeicherten drei Werten UNIQUEID, DATASYNCH, MANAGERID des Objekts D die beiden MANAGERID's nicht zueinander. Folglich wird nun das Objekt D des Managers M1 mit dem zugehörigen, im Agenten gespeicherten Objekt D synchronisiert.

Somit wird vorteilhaft das Verfahren zur Synchronisierung von einem Network Manager mit einem Network Agent als Ganzes verbessert, da es nun auch dann eingesetzt werden kann, wenn die lokale Datenbank eines Agenten durch ein Backup/Restore-System geschützt wird.

Vorteilhaft führt, wie bereits erläutert, das erfindungsgemäße Verfahren weiterhin auch dann zu fehlerfreien Synchronisationen, wenn neben einem Backup/Restore-System zudem dem (Primary-) Manager M1 zumindest ein (Backup-) Manager M2 zugeordnet wird.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in den Figuren dargestellt sind, näher erläutert. Es zeigt hierbei:
- Figur 1: eine Anordnung zur Durchführung des erfindungsgemäßen Verfahrens mit zwei Managern, einem Agenten und einem dem Agenten zugeordneten Backup-System sowie Programmen zur Durchführung des erfindungsgemäßen Verfahrens
- Figur 2: ein Ablaufdiagramm, in dem der Ablauf des erfindungsgemäßen Verfahrens schematisch dargestellt ist

In Figur 1 ist eine beispielhafte Anordnung zur Durchführung des erfindungsgemäßen Verfahrens dargestellt, die mit einem ersten (Primary-) Manager M1 und einem optionalen zweiten (Backup-) Manager M2 (in Figur 1 gestrichelt angedeutet), einem Agenten A und einem dem Agenten A zugeordneten Backup-System BS ausgeführt ist. Die Manager M und der Agent A sind durch ein Data Communication Network DCN miteinander verbunden. Das Backup-System BS ist dem Agenten A zugeordnet und umfasst beispielsweise ein Tape T zur Speicherung von Backups der lokalen Datenbasis des Agenten A. In den Managern M1 und M2 sowie dem Agenten A sind Programme P zur Durchführung des erfindungsgemäßen Verfahrens vorgesehen. Im Agenten A ist zumindest eine Dateneinheit D_{A} vorgesehen, der im Manager M1 eine Dateneinheit-Kopie D_{M1} und im Manager M2 eine Dateneinheit-Kopie D_{M2} zugeordnet ist. Die Dateneinheit D_{A} sowie die Dateneinheit-Kopien D_{M1}, D_{M2} sind beispielsweise als Objektinstanzen ausgebildet.

Die drei Objektinstanzen D_{M1}, D_{M2}, D_{A} repräsentieren jeweils dieselbe Dateneinheit D, die in dieser objektorientierten Ausführung auch als 'Objekt' bezeichnet wird. Die Objektinstanz D_{A} sei hierbei als Master ausgebildet, deren Werte immer als korrekt angesehen werden, während die Werte der kopierten Objektinstanzen D_{M1}, D_{M2} ggf. falsch sein können und in diesem Fall mit den Werten der Objektinstanz D_{A} zu synchronisieren sind. Jede der drei Objektinstanzen D_{M1}, D_{M2}, D_{A} umfasst hierzu zumindest einen ersten Wert UNIQUEID zur eindeutigen Identifikation der gegenseitigen Zugehörigkeit der drei Objektinstanzen D_{M1}, D_{M2}, D_{A}, einen zweiten Wert DATASYNCH zur Anzeige der Anzahl von Änderungen der Dateneinheit D sowie einen dritten Wert MANAGERID zur Anzeige, von wem die jeweils letzte Änderung der Dateneinheit D initiiert wurde. In den kopierten Objektinstanzen D_{M1}, D_{M2} ist üblicherweise zumindest ein weiterer Wert der Objektinstanz D_{A} als Kopie vorgesehen.

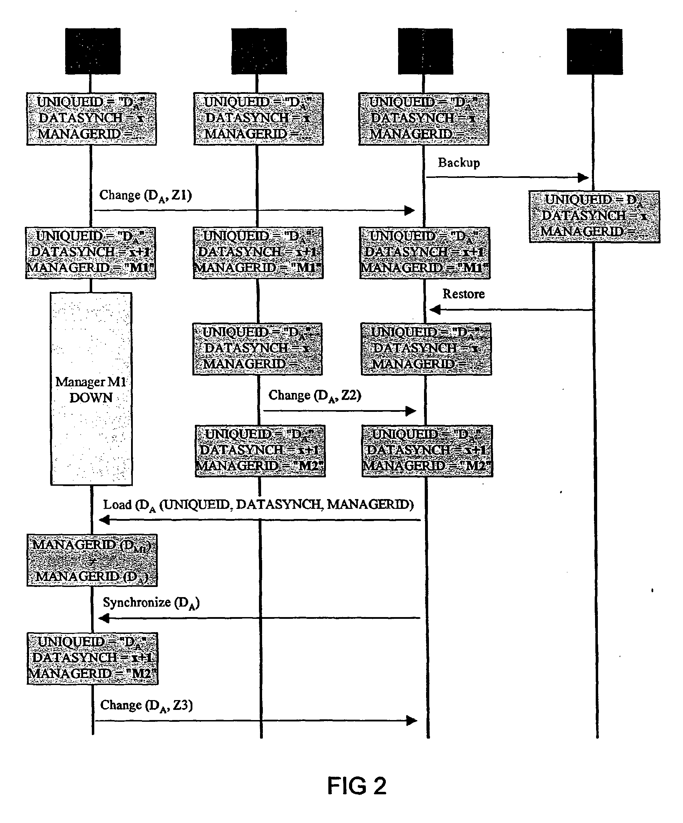

In Figur 2 ist ein beispielhafter Ablauf des erfindungsgemäßen Verfahrens schematisch dargestellt. Hierbei ist eine Synchronisation zwischen der Objektinstanz D_{A} im Agenten A und ihren zugeordneten Objektinstanzen D_{M1}, D_{M2} in den Managern M1, M2 betrachtet. In jeder der drei Objektinstanzen D_{M1}, D_{M2}, D_{A} ist hierbei der Wert UNIQUEID z.B. als String "D_{A}" ausgebildet. Die Werte DATASYNCH und MANAGERID werden erfindungsgemäß wie folgt belegt:
1. Ausgangssituation: In allen drei Objektinstanzen D_{M1}, D_{M2}, D_{A} sei DATASYNCH mit einer Zahl **x** und MANAGERID mit einem beliebigen String belegt.
2. Vom Agent A wird ein Backup durchgeführt. Hierdurch wird die Objektinstanz D_{A} im Backup-System BS mit obigen Werten gespeichert.
3. Vom Manager M1 wird eine Änderung des Objekts D auf Zustand Z1 initiiert. Dies wird dem Agenten A durch eine Nachricht Change (D_{A}, Z1) angezeigt. Dabei wird im Agenten A und im Manager M1 (und ggf. im Manager M2) DATASYNCH auf **x+1** erhöht und MANAGERID auf **"M1"** gesetzt.
4. Manager M1 (oder seine Verbindung zum Agenten A) fällt aus. Alternativ könnte die Datenbasis des Managers M1 ausfallen und durch eine ältere Backup-Version dieser Manager-Datenbasis ersetzt werden.
5. Vom Agent A (und/oder Manager M2) wird die Kontrolle des Objekts D übernommen.
6. Es tritt ein Fehler im Agenten A auf, der einen Restore des Objekts D_{A} von dem Backup-System BS erforderlich macht.
7. Als Folge des Backups ist DATASYNCH der Objektinstanz D_{A} im Agenten A (und ggf. der Objektinstanz D_{M2} im Manager M2) wieder **x** und MANAGERID wieder ein beliebiger String.
8. Vom Agenten A (oder Manager M2) wird eine Änderung des Objekts D auf Zustand Z1 (ungleich Z1) initiiert. Bei Initiierung durch den Manager M2 wird dies dem Agenten A durch eine Nachricht Change (D_{A}, Z2) angezeigt. Dabei wird im Agent A (und ggf. im Manager M2) DATASYNCH wieder auf **x+1** erhöht und MANAGERID auf **"A"** (oder ggf. **"M2")** gesetzt.
9. Der Ausfall von Manager M1 (oder dessen Verbindung zum Agenten A) ist beendet. Vom Manager M1 wird wieder die Steuerung des Objekts D übernommen.
10. Vom Manager M1 wird seine Synchronität mit dem Agenten A überprüft und ggf. wieder hergestellt. Hierzu werden die Werte UNIQUEID, DATASYNCH und MANAGERID der Objektinstanz D_{A} mit der Nachricht Load (D_{A}) an den Manager M1 übermittelt.
   Ein Vergleich des übermittelten Versionszähler DATASYNCH mit der im Manager M1 gespeicherten Kopie des Werts DATASYNCH würde zwar für das Objekt D Synchronität anzeigen, obwohl das Objekt D im Manager M1 den Zustand Z1 und im Agent A den Zustand Z2 hat, da beide mit **x+1** belegt sind.
   Jedoch ist die übermittelte, erfindungsgemäße MANAGERID (D_{A}) mit **"A"** (oder **"M2")** belegt, während der im Manager M1 gespeicherte Kopie der MANAGERID (D_{M1}) noch der String **"M1"** zugewiesen ist. Somit ergibt der erfindungsgemäße Vergleich von MANAGERID (D_{A}) mit MANAGERID (D_{M1}) Ungleichheit, d.h. fehlende Synchronität.
   Folglich wird nun die Objektinstanz D_{M1} im Manager M1 mit der Objektinstanz D_{A} des Agenten A synchronisiert. Hierzu werden die erforderlichen weiteren Werte der Objektinstanz D_{A} mit Hilfe der Nachricht Synchronize (D_{A}) vom Manager M1 geladen. Hierbei wird auch in der Objektinstanz D_{M1} DATASYNCH mit **x+1** und MANAGERID (D_{M1}) mit **"M2"** belegt.

Besonders schöne Vorteile ergeben sich, wenn der Vergleich der im Manager M1 gespeicherten Kopien der Werte UNIQUEID, DATASYNCH, MANAGERID der Objektinstanz D_{M} mit den zugehörigen, im Agenten A gespeicherten Werten UNIQUEID, DATASYNCH, MANAGERID lediglich bzw. erst beim Zugriff auf die im Manager M1 gespeicherte Objektinstanz D_{M} durchgeführt wird. Vorteilhaft werden hierdurch im Manager M gespeicherten Objektinstanzen D_{M}, auf die selten zugegriffen wird, nur bei Bedarf synchronisiert.

Gemäß einer bevorzugten Ausführungsform der Erfindung erfolgt dieser Vergleich bei jedem Zugriff auf die im Manager M1 gespeicherte Objektinstanz D_{M}. Alternativ kann der Vergleich nur einmal beim jeweils ersten Zugriff nach einem Ausfall des Managers M1 oder dessen Verbindung zum Agenten A erfolgen, wodurch die Synchronisationsaufwände weiter reduziert werden.

In einem weiteren Ausführungsbeispiel wird der Vergleich der im Manager M1 gespeicherten Kopien der Werte UNIQUEID, DATASYNCH, MANAGERID mit den jeweils zugehörigen, im Agenten A gespeicherten Werten UNIQUEID, DATASYNCH, MANAGERID für alle im Manager M gespeicherten Objektinstanzen D_{M} durchgeführt. Eine derartige Vollsynchronisation der Datenbasis des Managers M1 mit seinem Agenten A könnte z.B. nach jedem Ausfall des Managers M1 oder dessen Verbindung zum Agenten A vollautomatisch ausgeführt werden. Alternativ ist ein manueller Start der Synchronisation, insb. der Vollsynchronisation, vorgesehen.

Abschließend sei betont, dass die Beschreibung der für die Erfindung relevanten Komponenten des Kommunikationsnetzes KN grundsätzlich nicht einschränkend zu verstehen ist. Für einen einschlägigen Fachmann ist insbesondere offensichtlich, dass Begriffe wie 'Manager' oder 'Agent' funktional und nicht physikalisch zu verstehen sind. Somit können die Manager M1, M2 sowie der Agent A beispielsweise auch teilweise oder vollständig in Software und/oder über mehrere physikalische Einrichtungen verteilt realisiert werden.

## Patentansprüche

1. Verfahren zur Synchronisierung von einem Network Manager (M) mit einem Network Agenten (A) in einem Kommunikationsnetz, in dem Manager (M) Dateneinheiten-Kopien (D_{M}) von Dateneinheiten (D_{A}) ihrer Agenten (A) führen,
mit folgenden Schritten:
- im Agenten (A) wird für jede Dateneinheit (D_{A}) ein erster Wert (UNIQUEID) gespeichert, der für jede Dateneinheit (D_{A}) eindeutig ist,
- im Agenten (A) wird für jede Dateneinheit (D_{A}) ein zweiter Wert (DATASYNCH) gespeichert zur Anzeige der Anzahl von Änderungen der zugehörigen Dateneinheit (D_{A}),
- im Agenten (A) wird für jede Dateneinheit (D_{A}) ein dritter Wert (MANAGERID) gespeichert zur Anzeige, von wem die jeweils letzte Änderung initiiert wurde,
- im Manager (M) wird für jede Daten-Kopie (D_{M}) eine Kopie des ersten Werts (UNIQUEID), des zweiten Werts (DATASYNCH) und des dritten Werts (MANAGERID) gespeichert,
- die im Manager (M) gespeicherten Kopien der ersten, zweiten und dritten Werte (UNIQUEID, DATASYNCH, MANAGERID) werden mit den jeweils zugehörigen, im Agenten (A) gespeicherten ersten, zweiten und dritten Werten (UNIQUEID, DATASYNCH, MANAGERID) verglichen,
- jede Daten-Kopie (D_{M}), deren im Manager (M) gespeicherte Kopien der ersten, zweiten und dritten Werte (UNIQUEID, DATASYNCH, MANAGERID) nicht zu den zugehörigen, im Agenten (A) gespeicherten ersten, zweiten und dritten Werten (UNIQUEID, DATASYNCH, MANAGERID) passen, wird mit der zugehörigen, im Agenten (A) gespeicherten Dateneinheit (D_{A}) synchronisiert.

2. Verfahren nach Anspruch 1,
bei dem der Vergleich der im Manager (M) gespeicherten Kopien der ersten, zweiten und dritten Werte (UNIQUEID, DATASYNCH, MANAGERID) einer der Dateneinheiten-Kopien (D_{M}) mit den zugehörigen, im Agenten (A) gespeicherten ersten, zweiten und dritten Werten (UNIQUEID, DATASYNCH, MANAGERID) beim Zugriff auf die im Manager (M) gespeicherte Daten-Kopie (D_{M}) durchgeführt wird.

3. Verfahren nach Anspruch 2,
bei dem der Vergleich bei jedem Zugriff auf eine der im Manager (M) gespeicherten Dateneinheiten-Kopien (D_{M}) erfolgt.

4. Verfahren nach Anspruch 2,
bei dem der Vergleich nur einmal beim jeweils ersten Zugriff auf eine der im Manager (M) gespeicherten Dateneinheiten-Kopien (D_{M}) nach einem Ausfall des Managers (M) oder dessen Verbindung zum Agenten (A) erfolgt.

5. Verfahren nach einem der vorstehenden Ansprüche,
bei dem der Vergleich der im Manager (M) gespeicherten Kopien der ersten, zweiten und dritten Werte (UNIQUEID, DATASYNCH, MANAGERID) mit den jeweils zugehörigen, im Agenten (A) gespeicherten ersten, zweiten und dritten Werten (UNIQUEID, DATASYNCH, MANAGERID) für alle im Manager (M) gespeicherten Dateneinheiten-Kopien (D_{M}) durchgeführt wird.

6. Programm (P) umfassend Softwarecodeabschnitte, mit denen ein Verfahren nach einem der vorstehenden Ansprüche durch einen Prozessor ausgeführt wird.

7. Anordnung zur Durchführung eines Verfahrens nach einem der Ansprüche 1 bis 5.

## Claims

1. Method for synchronizing a network manager (M) to a network agent (A) in a communications network, in which managers (M) maintain data unit copies (D_{M}) of data units (D_{A}) of their agents (A),
having the following steps:
- a first value (UNIQUEID) which is unique for each data unit (D_{A}), is stored for each data unit (D_{A}) in the agent (A),
- a second value (DATASYNCH) for indicating the number of changes to the associated data unit (D_{A}) is stored for each data unit (D_{A}) in the agent (A),
- a third value (MANAGERID) for indicating who initiated the respective last change is stored for each data unit (D_{A}) in the agent (A),
- a copy of the first value (UNIQUEID), of the second value (DATASYNCH) and of the third value (MANAGERID) is stored for each data copy (D_{M}) in the manager (M),
- the copies of the first, second and third values (UNIQUEID, DATASYNCH, MANAGERID) which are stored in the manager (M) are compared with the respectively associated first, second and third values (UNIQUEID, DATASYNCH, MANAGERID) which are stored in the agent (A),
- each data copy (D_{M}) whose copies of the first, second and third values (UNIQUEID, DATASYNCH, MANAGERID) which are stored in the manager (M) do not match the associated first, second and third values (UNIQUEID, DATASYNCH, MANAGERID) which are stored in the agent (A) is synchronized to the associated data unit (D_{A}) which is stored in the agent (A) .

2. Method according to Claim 1,
in which the comparison of the copies of the first, second and third values (UNIQUEID, DATASYNCH, MANAGERID) which are stored in the manager (M), of one of the data unit copies (D_{M}) with the associated first, second and third values (UNIQUEID, DATASYNCH, MANAGERID) which are stored in the agent (A) is carried out during access to the data copy (D_{M}) which is stored in the manager (M).

3. Method according to Claim 2,
in which the comparison is carried out whenever access is made to one of the data unit copies (D_{M}) which are stored in the manager (M).

4. Method according to Claim 2,
in which the comparison is carried out only once when access is in each case made for the first time to one of the data unit copies (D_{M}) which are stored in the manager (M), after a failure of the manager (M) or after its connection to the agent (A).

5. Method according to one of the preceding claims,
in which the comparison of the copies of the first, second and third values (UNIQUEID, DATASYNCH, MANAGERID) which are stored in the manager (M) with the respectively associated first, second and third values (UNIQUEID, DATASYNCH, MANAGERID) which are stored in the agent (A) is carried out for all the data unit copies (D_{M}) which are stored in the manager (M).

6. Program (P) comprising software code sections, by means of which a method according to one of the preceding claims is carried out by a processor.

7. Arrangement for carrying out a method according to one of Claims 1 to 5.

## Revendications

1. Procédé de synchronisation d'un gestionnaire de réseau (M) avec un agent de réseau (A) dans un réseau de communication dans lequel des gestionnaires (M) tiennent des copies (D_{M}) d'unités de données (D_{A}) de leurs agents (A), comprenant les étapes suivantes:
- pour chaque unité de données (D_{A}), une première valeur (UNIQUEID) qui est univoque pour chaque unité de données (D_{A}) est mise en mémoire dans l'agent (A),
- pour chaque unité de données (D_{A}), une deuxième valeur (DATASYNCH) est mise en mémoire dans l'agent (A) pour afficher le nombre de modifications de l'unité de données associée (D_{A}),
- pour chaque unité de données (D_{A}), une troisième valeur (MANAGERID) est mise en mémoire dans l'agent (A) pour afficher par qui la dernière modification dans chaque cas a été initiée,
- pour chaque copie de données (D_{M}), une copie de la première valeur (UNIQUEID), de la deuxième valeur (DATASYNCH) et de la troisième valeur (MANAGERID) est mise en mémoire dans le gestionnaire (M),
- les copies, stockées dans le gestionnaire (M), des premières, deuxièmes et troisièmes valeurs (UNIQUEID, DATASYNCH, MANAGERID) sont comparées avec les premières, deuxièmes et troisièmes valeurs (UNIQUEID, DATASYNCH, MANAGERID) respectivement associées stockées dans l'agent (A),
- chaque copie de données (D_{M}) dont les copies, stockées dans le gestionnaire (M), des premières, deuxièmes et troisièmes valeurs (UNIQUEID, DATASYNCH, MANAGERID) ne correspondent pas aux premières, deuxièmes et troisièmes valeurs (UNIQUEID, DATASYNCH, MANAGERID) associées stockées dans l'agent (A) est synchronisée avec l'unité de données (D_{A}) associée stockée dans l'agent (A) .

2. Procédé selon la revendication 1, dans lequel la comparaison des copies, stockées dans le gestionnaire (M), des premières, deuxièmes et troisièmes valeurs (UNIQUEID, DATASYNCH, MANAGERID) de l'une des copies des unités de données (D_{M}) avec les premières, deuxièmes et troisièmes valeurs (UNIQUEID, DATASYNCH, MANAGERID) associées stockées dans l'agent (A) est effectuée lors de l'accès à la copie de données (D_{M}) stockée dans le gestionnaire (M).

3. Procédé selon la revendication 2, dans lequel la comparaison se produit à chaque accès à l'une des copies des unités de données (D_{M}) stockées dans le gestionnaire (M).

4. Procédé selon la revendication 2, dans lequel la comparaison ne se produit qu'une fois au premier accès dans chaque cas à l'une des copies des unités de données (D_{M}) stockées dans le gestionnaire (M) après une défaillance du gestionnaire (M) ou de sa liaison vers l'agent (A).

5. Procédé selon l'une des revendications précédentes, dans lequel la comparaison des copies, stockées dans le gestionnaire (M), des premières, deuxièmes et troisièmes valeurs (UNIQUEID, DATASYNCH, MANAGERID) avec les premières, deuxièmes et troisièmes valeurs (UNIQUEID, DATASYNCH, MANAGERID) respectivement associées stockées dans l'agent (A) est effectuée pour toutes les copies des unités de données (D_{M}) stockées dans le gestionnaire (M).

6. Programme (P) comprenant des segments de code logiciel permettant l'exécution, par un processeur, d'un procédé selon l'une des revendications précédentes.

7. Ensemble permettant la mise en oeuvre d'un procédé selon l'une des revendications 1 à 5.
